# EUROPÄISCHE PATENTSCHRIFT

(11) **EP 0 615 300 B1**
(45) Veröffentlichungstag und Bekanntmachung des Hinweises auf die Patenterteilung: **18.09.1996**
(21) Anmeldenummer: 94100397.2
(22) Anmeldetag: 13.01.1994
(51) Int. Cl.: H01M 10/04, H01M 10/28, H01M 4/24

(54) **Knopfzelle**
Button cell
Pile du type bouton

(30) Priorität: 24.02.1993 DE 4305561
(43) Veröffentlichungstag der Anmeldung: 14.09.1994
(73) Patentinhaber: VARTA Batterie Aktiengesellschaft, D-30419 Hannover (DE)
(72) Erfinder: Glaser, Helmut F., Singapore 1025 (SG)
(74) Vertreter: Kaiser, Dieter Ralf, Dipl.-Ing.

(56) Entgegenhaltungen:
- EP-A- 0 123 900
- EP-A- 0 460 424
- UA-A- 4 256 812
- PATENT ABSTRACTS OF JAPAN vol. 8, no. 173 (E-259) 9. August 1984 JP-A-59 066 055 (SANYO DENKI KK)
- PATENT ABSTRACTS OF JAPAN vol. 6, no. 226 (E-141) (1104) 11. November 1982 & JP-A-57 128 459 (CITIZEN TOKEI K.K.)
- PATENT ABSTRACTS OF JAPAN vol. 16, no. 22 (E-1156) 20. Januar 1992 & JP-A-03 238 756 (MATSUSHITA ELECTRIC IND CO)
- PATENT ABSTRACTS OF JAPAN vol. 12, no. 389 (E-669) (3236) 17. Oktober 1988 & JP-A-63 131 472 (SANYO ELECTRIC CO LTD)

## Beschreibung

Die Erfindung betrifft eine Knopfzelle, welche in einem flachzylindrischen, gasdichten Gehäuse übereinander angordnet mindestens eine positive und eine negative Elektrode mit zwischenliegendem Separator sowie einen Elektrolyten enthält.

Knopfzellen bestehen aus einem Gehäusenapf und einem Deckel, die beide aus vernickeltem Tiefzieh-Bandeisen als Stanz-Ziehteile hergestellt sind. Gewöhnlich ist der Gehäusenapf positiv und der Deckel negativ gepolt. Dabei können sie verschiedene elektrochemische Systeme beinhalten. Sehr verbreitet sind Knopfzellen des wiederaufladbaren Ni/Cd-Systems. Neuerdings gewinnen Knopfzellen mit Metalloxid/Metallhydrid-Systemen, insbesondere Ni/Nickelhydrid-Zellen, zunehmend an Bedeutung.

Zumindest die positiven Elektroden vieler konventioneller Knopfzellen, bei dem alkalischen Ni/Cd-System auch die negativen Elektroden, sind Masse-Elektroden in Form gepreßter Pulvertabletten, die in einem feinmaschigen Reinnickeldrahtgewebe eingefaßt sind.

Zwischen den Elektroden ist ein feinporiger Scheider aus Kunststoff-Vlies angeordnet. Eine gewellte Kontaktfeder auf der Rückseite der negativen Elektrode bewirkt einen definierten Preßdruck auf den Plattensatz und ergibt damit einen gleichmäßigen Kontaktwiderstand zwischen Elektroden und Gehäuse.

Das Schließen der Zellen erfolgt durch Umbördeln des Napfrandes über den Deckelrand. Dabei dient ein Kunststoffring gleichzeitig als Dichtring und Isolierung des Napfes vom Deckel.

Die Fertigung von Pulverpreßelektroden für Knopfzellen ist umständlich und überdies für einen zügigen Produktionsablauf, der weitgehend von automatischen Arbeitsgängen bestimmt wird, ungeeignet. Zunächst muß das Massepulver dosiert und zur Tablette gepreßt werden; die Tablette wird anschließend in ein Körbchen aus Nickeldrahtgewebe eingelegt, mit einem Plättchen aus dem gleichen Gewebematerial abgedeckt und das Körbchen durch Einschlagen eines über die Tablette hinausstehenden Randes über dem Abdeckplättchen geschlossen. Danach wird die Elektrode abermals dem Druck eines Preßstempels unterworfen.

Dieses Verfahren ist wegen der diskontinuierlichen Folge der Arbeitsschritte nicht nur zeitaufwendig, sondern durch den Aufwand an Nickeldrahtgewebenetz, welches die zur Elektrodenarmierung und zur Stromableitung notwendige Menge wesentlich übersteigt, auch kostspielig.

Aus den Dokumenten JP-A 57-128 459 bzw. EP-A 0 123 900 sind Knopfzellen bekannt, bei denen die negative Elektrode aus einem bandförmigen Metall oder einer Legierung, insbesondere aus Lithium oder einer Lithiumlegierung, hergestellt wird.

Der Erfindung liegt die Aufgabe zugrunde, für die Bestückung von Knopfzellen trägergebundene Elektroden verfügbar zu machen.

Die Aufgabe wird erfindungsgemäß mittels einer Knopfzelle, wie sie im Anspruch 1 definiert ist, gelöst.

Danach ist diese mit Elektroden von quadratischer oder sechseckiger Form anstelle von runden Elektroden bestückt. Ein besonderer Vorteil dieser neuen Elektroden liegt darin, daß sie sich nicht auf die bei den runden Preßpulvertabletten übliche Weise, sondem sehr viel einfacher aus einem an sich fertigen Elektrodenwalzband entsprechend der gewünschten Form ausstechen lassen. Aber auch gegenüber runden Elektroden, die sich gleichfalls aus einem Endlosband ausschneiden lassen, haben die erfindungsgemäßen eckigen Elektroden den Vorteil voraus, daß ihre Form eine praktisch von jedem Verschnitt freie Ausnutzung des Bandmaterials erlaubt.

Die kontinuierliche Produktion eines Walzbandes fügt sich zwanglos in den automatischen Fertigungsfluß der Knopfzellenherstellung ein.

Anhand einiger Figuren wird die Erfindung nachfolgend näher erläutert.
- Figur 1: zeigt den Herstellungsgang erfindungsgemäßer Elektroden schematisch
- Figur 2: zeigt die Aufteilbarkeit des Walzbandes in quadratisch oder hexagonal geformte Elektroden
- Figur 3: zeigt eine Knopfzelle mit quadratisch geformten Elektroden
- Figur 4: zeigt eine Knopfzelle mit sechseckig geformten Elektroden

Gemäß Figur wird Massepulver aus einem Vorratsbehälter 1 über den Fülltrichter 2 auf das Walzenpaar eines Walzenstuhls oder Kalanders 3 aufgegeben und zu einem Walzband verdichtet. Gleichzeitig wird ein auf dem Coil 4 bevorratetes Nickeldraht-Eisenstreckmetall treten kann, über Führungsrollen 6 von dem Kalander eingezogen und dort mit dem Massepulver zusammengewalzt.

Das einseitig armierte Walzband 7 passiert weitere Führungsrollen 8 und läuft zwischen Schneidrollen 9 hindurch, die es in Bahnen gewünschter Breite aufteilen. In der Stanzvorrichtung 10 werden dann die Bahnen in quadratische oder sechseckige Einzelelektroden zerlegt.

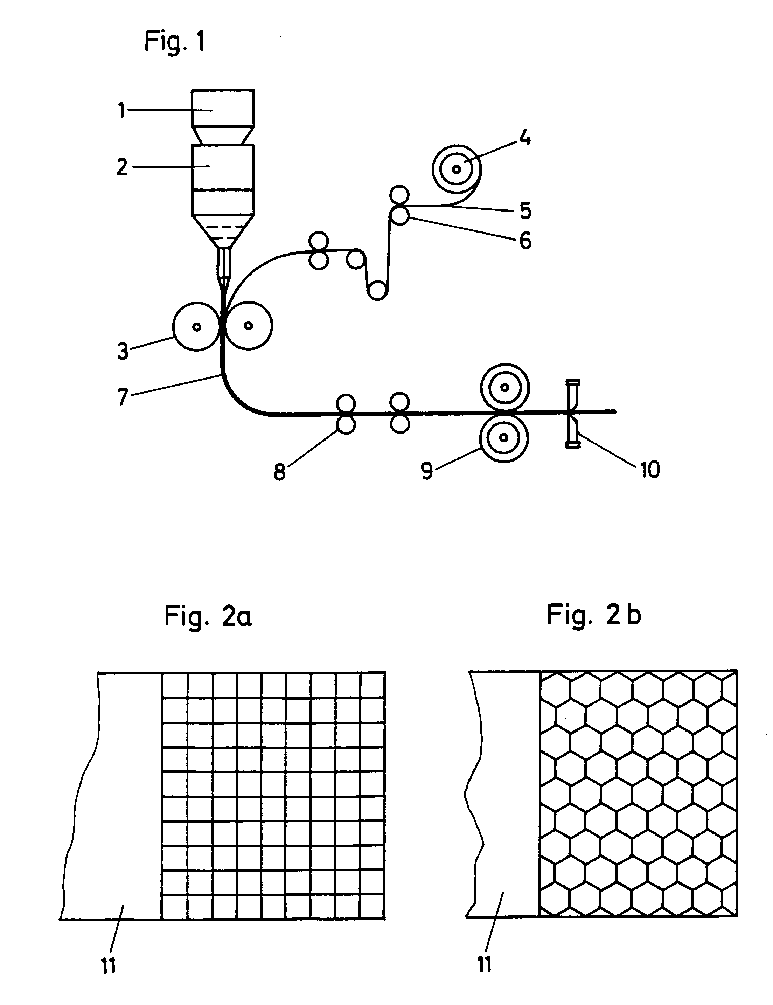

In Figur 2a ist die Möglichkeit einer Aufteilung eines Walzbandstreifens 11 in quadratische Elektroden (z.B. der Kantenlänge 5,8mm und der Fläche 33,6mm²) oder in Figur 2b die Aufteilbarkeit in sechseckige Elektroden (z.B. der Kantenlänge 4,1 mm und der Fläche 43,6mm²) dargestellt.

Bei der quadratischen Aufteilung ist der Abfall des verarbeiteten Bandes praktisch Null. Bei der hexagonalen Aufteilung muß ein geringerer Verschnitt von 4,6%, durch die nicht ausnutzbaren Randpartien bedingt, in Kauf genommen werden.

Aus einem Walzband abtrennbare oder ausstanzbare Elektroden von erfindungsgemäßer Form sind somit im Hinblick auf eine Materialeinsparung äußerst günstig.

Ungünstiger dagegen liegen die Verhältnisse, wenn der Walzbandstreifen in runde Elektroden ähnlicher Größe nach dem Muster einer hexagonal-dichten Anordnung wie bei Figur 2b aufgeteilt werden soll. Der Schnittabfall liegt in diesem Fall theoretisch bei 11%, praktisch jedoch aus werkzeugtechnischen Gründen weit darüber.

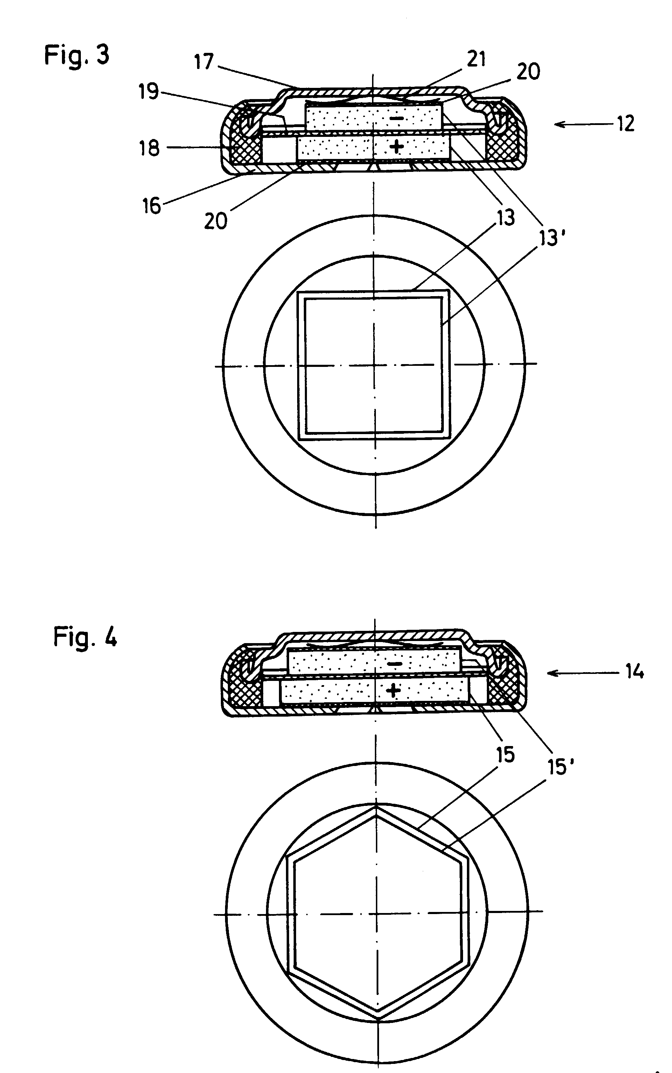

In Figur 3 ist eine Knopfzelle 12 mit quadratischen Elektroden 13, 13' und in Figur 4 eine Knopfzelle 14 mit hexagonalen Elektroden 15, 15', jeweils in einem Querschnitt und in einer Draufsicht auf den Gehäusenapf von innen, dargestellt.

In dem aus Gehäusenapf 16 und Deckel 17 unter Einschluß des Dichtringes 18 gebildeten Gehäuse sind die Elektroden von einem Vliesscheider 19 getrennt und üblicherweise so montiert, daß die Metallnetz- oder Streckmetallauflagen 20 nach außen, d.h. zu den Gehäuseteilen hinweisen. Zur Erzeugung des notwendigen Preßdrucks ist der negativen Elektrode 13' zusätzlich eine Kontaktfeder 21 zugeordnet.

In der Draufsicht auf die Bodenfläche des Gehäusenapfes läßt sich jeweils die positive Elektrode gut als ein dem kreisförmigen Dichtring einbeschriebenes Quadrat bzw. Sechseck erkennen. Erfindungsgemäßen Knopfzellen können vorzugsweise die wiederaufladbaren Systeme Ni/Cd und Ni/Metallhydrid (Ni/MH) zugrunde liegen.

Solche Zellen enthalten dann neben einem alkalischen Elektrolyten eine positive Nickelhydroxidelektrode und eine negative Cadmiumelektrode bzw. eine negative Elektrode aus einem zur Speicherung von Wasserstoff befähigten Legierungsmetall.

Als eine sehr wirksame Abhilfe bei dem Problem des sog. Squeezing (Herauspressen von überschüssigem Elektrolyt bei Druckausübung auf das Elektrodenpaket beim Schließen von Ni/MH-Knopfzellen, woraus Undichtigkeiten entstehen können) haben sich die Lücken zwischen der runden Zellendichtung und den eckigen Elektroden erwiesen, indem sie Freiräume für den herausgequetschten Elektrolyten anbieten. Bei Einsatz runder Elektroden könnte diese Möglichkeit nur mittels einer Streckmetall-Einlage unter der positiven Elektrode geschaffen werden.

Die neuen Elektroden verhalten sich auch gegenüber Einflüssen bei einer dem Einbau vorausgehenden Laugebehandlung mechanisch stabil. Die Laugebehandlung ist ein praxisüblicher Schritt, der darin besteht, daß eine negative, aus Gründen besserer Filtrierbarkeit zunächst als Cadmiumkarbonat gefällte Cadmiummasse mit warmer Lauge dekarbonatisiert, d.h. zu Cd(OH)₂ umgefällt wird. Es hat sich gezeigt, daß die kalandrierten Elektroden während der Entkarbonatisierung an den Kanten nicht abbröckeln.

Zur Verbesserung des Gasverzehrs kann die negative Walzbandelektrode gemäß der Erfindung vorteilhafterweise mit einem Material in Verbindung gebracht werden, welches die Sauerstoffreduktion katalysiert. Ein solches Material ist beispielsweise ein Gemisch aus Aktivkohle, Leitruß und einem hydrophoben Bindemittel. Diese Mischung kann beim Herstellungsprozeß der Elektrode entweder in das als Trägerband vorgesehene Metallgewebe oder Streckmetall, bevor dieses zusammen mit dem Massepulver in den Kalander einläuft, eingewalzt oder auf das an sich fertige Elektrodenwalzband nachträglich aufgewaltzt werden. Durch den unmittelbaren elektronenleitenden Kontakt mit der Hauptelektrode fungiert diese Schicht als Hilfselektrode, deren praktisch polarisationsfreie Oberfläche der bevorzugte Ort des Sauerstoffverzehrs ist.

Es liegt auch im Rahmen der Erfindung, daß die Knopfzelle über ein Sicherheitsventil in Gestalt einer in die Gehäusewandung eingebrachten Schwachstelle verfügt, die als Sollbruchstelle bei extrem hohem Innendruck aufplatzt und so eine Bombierung der Zelle verhindert. Derartige Schwachstellen sind vorzugsweise rillenförmige Ausnehmungen im Boden des Gehäusenapfes und als Polaritätszeichen (+ Zeichen) oder Firmensymbol gestaltet.

Dank der erfindungsgemäßen Elektroden sind Knopfzellen verfügbar geworden, welche bekannten Knopfzellen von gleicher Form und Größe, jedoch bestückt mit konventionellen Elektroden in aufwendigen Gewebekörbchen-Umhüllungen, hinsichtlich der Kapazitätsleistung mindestens ebenbürtig sind. Durch die bessere Materialausnutzung in bezug auf den Verbrauch an Metallgewebenetz wird jedoch bei den neuen Elektroden eine Kosteneinsparung von bis zu 50% erreicht.

Versuche haben ferner gezeigt, daß Sollkapazitäten, die für Knopfzellen mit runden Walzbandelektroden vorgeschrieben sind, auch mit den erfindungsgemäßen quadratischen oder sechseckigen Elektroden erfüllt werden.

## Patentansprüche

1. Knopfzelle, welche in einem flachzylindrischen, gasdichten Gehäuse übereinander angeordnet mindestens eine positive und eine negative Elektrode mit zwischenliegendem Separator sowie einen Elektrolyten enthält, wobei die Anode in polygonaler Form aus einem Bandmaterial ausgeschnitten oder ausgestanzt ist, dadurch gekennzeichnet, daß die Anode und die Kathode aus Bandmaterial hergestellt sind, welches durch Zusammenwalzen eines Walzbandes aus in einem Walzenstuhl verdichteten aktiven Massepulvem mit einem Metallgewebeband oder Streckmetallband gebildet sind, wobei Anode und Kathode quadratisch oder sechseckig geformt sind.

2. Knopfzelle nach Anspruch 1, dadurch gekennzeichnet, daß das Streckmetall aus Nickel oder vernickeltem Stahl besteht.

3. Knopfzelle nach den Ansprüchen 1 und/oder 2, dadurch gekennzeichnet, daß sie eine positive Nickelhydroxidelektrode, eine negative Cadmium- oder Wasserstoffspeicherelektrode und einen alkalischen Elektrolyten enthält.

4. Knopfzelle nach einem oder mehreren der Ansprüche 1 bis 3, dadurch gekennzeichnet, daß die Metallgewebe- oder Streckmetallschicht jeder Elektrode dem Gehäusedeckel oder Gehäuseboden zugekehrt ist.

5. Knopfzelle nach einem oder mehreren der Ansprüche 1 bis 4, dadurch gekennzeichnet, daß das Metallgewebe- oder Streckmetallband zusätzlich mit einem Gemisch aus Aktivkohle, Leitruß und einem hydrophoben Bindemittel beschichtet ist.

6. Knopfzelle nach einem oder mehreren der Ansprüche 1 bis 5, dadurch gekennzeichnet, daß an ihrem Gehäuse eine Sollbruchstelle in Gestalt einer rillenförmigen Schwächung der Gehäusewandung vorgesehen ist.

## Claims

1. Button cell which contains arranged one above the other in a gas-tight housing of truncated cylindrical shape at least one positive and one negative electrode having an interposed separator and an electrolyte, with the anode being cut or punched in polygonal form from a strip material, characterised in that the anode and the cathode are manufactured from strip material which is formed by rolling together a rolled strip of active mass powders compressed in a roller mill and a strip of woven or expanded metal, with the anode and the cathode being of square or hexagonal form.

2. Button cell according to Claim 1, characterised in that the expanded metal comprises nickel or nickel-plated steel.

3. Button cell according to Claim(s) 1 and/or 2, characterised in that it contains a positive nickel hydroxide electrode, a negative cadmium or hydrogen storage electrode and an alkaline electrolyte.

4. Button cell according to one or more of Claims 1 to 3, characterised in that the layer of woven or expanded metal of each electrode faces the cover or base of the housing.

5. Button cell according to one or more of Claims 1 to 4, characterised in that the strip of woven or expanded metal is additionally coated with a mixture of activated carbon, conductive carbon black and a hydrophobic binder.

6. Button cell according to one or more of Claims 1 to 5, characterised in that there is provided on the housing thereof a predetermined break point in the form of a groove-shaped weakness in the wall of the housing.

## Revendications

1. Pile du type bouton, qui contient dans un boîtier cylindrique plat étanche aux gaz au moins une électrode positive et une électrode négative disposées l'une sur l'autre avec un séparateur placé entre elles ainsi qu'un électrolyte, l'anode de forme polygonale étant découpée ou matricée à partir d'un matériau en bande, pile caractérisée en ce que l'anode et la cathode sont réalisées à partir d'un matériau en bande, qui est formé par laminage conjoint d'une bande laminée à partir de poudres de masses actives avec une bande de tissu métallique ou une bande de métal déployé, les anodes et les cathodes étant de forme carrée ou hexagonale.

2. Pile du type bouton selon la revendication 1, caractérisée en ce que le métal déployé est du nickel ou de l'acier nickelé.

3. Pile du type bouton selon les revendications 1 et/ou 2, caractérisée en ce qu'elle contient une électrode d'hydroxyde de nickel positive, une électrode de cadmium ou de réservoir d'hydrogène négative et un électrolyte alcalin.

4. Pile du type bouton selon une ou plusieurs des revendications 1 à 3, caractérisée en ce que la couche de tissu métallique ou la couche de métal déployé de chaque électrode est tournée vers le couvercle ou le fond du boîtier.

5. Pile du type bouton selon une ou plusieurs de revendications 1 à 4, caractérisée en ce que la bande de tissu métallique ou de métal déployé est en outre enduit d'un mélange de charbon actif, de noir de carbone conducteur et d'un liant hydrophobe.

6. Pile du type bouton selon une ou plusieurs des revendications 1 à 5, caractérisée en ce qu'il est prévu sur leur boîtier un point destiné à la rupture sous la forme d'un affaiblissement en forme de rainure de la paroi du boîtier.
